**Europäisches Patentamt**

**European Patent Office**

**Office européen des brevets**

(19)

(11) Publication number: **0 247 426**
**A2**

(12) # EUROPEAN PATENT APPLICATION

(21) Application number: **87106814.4**

(22) Date of filing: **11.05.87**

(51) Int. Cl.⁴: **C 09 J 3/14, C 08 L 33/08**

(30) Priority: **16.05.86 US 863763**

(43) Date of publication of application: **02.12.87**
**Bulletin 87/49**

(84) Designated Contracting States: **AT BE CH DE ES FR GB GR IT LI LU NL SE**

(71) Applicant: **S.C. JOHNSON & SON, INC., 1525 Howe Street, Racine, Wisconsin 53403 (US)**

(72) Inventor: **Calder,G. Vincent, 4603 Carter Drive, Racine Wisconsin 53402 (US)**
Inventor: **Frazee, Glenn R., 2012 28th Street, Kenosha Wisconsin 53140 (US)**

(74) Representative: **Baillie, Iain Cameron et al, c/o Ladas & Parry Isartorplatz 5, D-8000 München 2 (DE)**

(54) High-solids thermosetting adhesive compositions and method of preparing same.

(57) High-solids content thermosetting adhesive compositions having a workable viscosity are prepared by admixing a cross linking agent with a vinylic polymer having (1) an Mn of 1,500-6,000, (2) a polydispersity of 3 or less and (3) a number average functionality of at least 1.5.

- 1 -

The present invention relates to high-solids thermosetting adhesive compositions and methods of preparing the same.

Currently available adhesives typically contain less than 70% solids, with the balance of these adhesive formulations being primarily volatile organic compounds such as methyl ethyl ketone, toluene, ethyl acetate, or a chlorinated hydrocarbon such as 1,1,1-trichloroethane. The United States Environmental Protection Agency (EPA) regulations require that many industrial coatings formulations for general product applications contain less than 2.8 pounds of volatile organic compounds (VOC) per gallon. For the most part the adhesives industry has been unable to comply with these EPA requirements for industrial coatings. Consequently, exemptions from these regulations for industrial coatings have been granted by the EPA. A particular exemption involves the use of 1,1,1-trichloroethane in amounts greater than 2.8 pounds per gallon of coating formulation. 1,1,1-Tirchoroethane is commonly used as a solvent in adhesive formulations. Problems encountered with the use of 1,1,1-trichloroethane include high solution viscosities and high specific gravities of formulations containing this solvent.

Substituting water-borne compositions for solvent-borne compositions is usually not acceptable because of performance problems associated with the water-based adhesives. These performance problems include inadequate wetting properties, poor water resistance and inferior physical adhesive properties.

United States Patent 4,414,370 described a process to bulk polymerize vinylic monomoers to prepare low weight molecular polymers. The process employs thermal initiation at reaction temperatures from 235°C to 310°C and residence times of at least 2 minutes. The continuous process is conducted in a stirred reactor zone containing a molten resin mix. The polymers produced by the process disclosed in U.S. Patent 4,414,370 can be employed in industrial coatings, conventional floor finishing compositions, inks, and the like.

United States Patent 4,529,787 discloses a continuous process to bulk polymerize vinylic monomers to prepare uniform low molecular weight polymers. The continuous process employs minor amounts of initiator, and optionally solvents, at short residence times and moderate reaction temperatures to provide high yields of a product suitable for high solids applications. The high solids cross linkable polymers disclosed in this patent are taught to have applications in formulated products such as enamel appliance coatings, overprint varnishes, adhesives and auto-,truck- or airplane exterior finishes, coatings and the like.

United States Patent 4,546,160 discloses a continuous process to bulk polymerize acrylic monomers to prepare uniform low molecular weight polymers. The process employs minor amounts of initiator, and optionally solvents, at short residence times and moderate reaction temperatures. The process provides high yields of a polymer product suitable for high solids applications in floor finishes, ink dispersants, water based clear overprint varnishes, impregnants, binders, plasticizers, leveling agent, melt flow improvers, functional fluids, enamel appliance coatings, overprint varnishes, adhesives and

- 3 -

auto-, truck- or airplane exterior finishes and coatings.

The object of the present invention is to provide a solution to the problem of having high levels of volatile organic compounds present in adhesive formulations.

The present invention provides a method of preparing a 100% solids thermosetting adhesive composition having a suitable working viscosity which is characterized by admixing

(a)  a vinylic polymer having:

(i)  a number average functionality of at least about 1.5;

(ii)  a polydispersity of less than about 3; and

(iii)  a number average molecular weight (Mn) of from about 1,000 to about 6,000; and

(b)  an effective adhesive-forming amount of a cross linking agent to form an adhesive polymer.

The present invention also provides a 100% solids thermosetting adhesive composition having a workable viscosity which is characterized by:

(a)  a vinylic polymer having:

(i)  a number average functionality of at least about 1.5;

(ii)  a polydispersity of less than about 3; and

(iii)  a number average molecular weight (Mn) of from about 1,000 to about 6,000; and

(b)  an effective adhesive-forming amount of a cross linking agent.

The thermosetting adhesive compositions prepared according to the present invention can have a high solids content with a workable viscosity. The adhesives can optionally contain solvents and standard adhesive additives.

Of particular interest in the practice of the present invention, an hydroxyl functional vinylic, i.e., acrylic, polymer is admixed with a cross linking agent to produce a 100 percent solids high quality and high performance adhesive. These 100% solids adhesives are useful as adhesives for laminating flexible packaging films, engineering (or structural) adhesives, pressure sensitive tapes and labels and other adhesives applications.

When used herein, the term "100 percent (%) solids adhesives" refers to adhesive compositions which are substantially void of volatile ingredients. In other words, this term refers to adhesive compositions which contain substantially all non-volatile ingredients.

In practicing the present invention a cross linking monomer or a cross linking polymer, i.e., cross linking agent, is admixed with a functional vinylic polymer having:

(a) a number average functionality of at least 1.5:

(b) a polydispersity of less than about 3; and

(c) a number average molecular weight (Mn) of from about 1,000 to about 6,000.

The polymers have a glass transition temperature of from about $-70^{\circ}$C. to about room temperature.

The functional vinylic polymer and the cross linking agents are admixed in amounts effective to form an adhesive composition. The optimum ratio of functional vinylic polymer to cross linking agent will depend on a variety of factors, such as, for example, the particular monomers and functional groups present on the vinylic polymer, the number average molecular weight of the functional vinylic polymer, the number of reactive functional groups per polymer chain, the specific cross linking agent employed and the specific end use for the adhesive product. With these factors in mind, one skilled in the art can readily determine the optimum ratio without undue experimentation.

Suitable functional vinylic polymers are those polymers having at least two reactive functional groups per polymer chain. Typical functional vinylic polymers include the addition polymers formed by the addition polymerization of vinylic monomers such as alpha-methylstyrene, vinyl toluene, styrene, acrylic acid, methacrylic acid, esters of acrylic acid, esters of methacrylic acid and derivitives of these monomers. The functional groups can be present on the monomer prior to preparation of the polymers or, optionally, the functional groups may be introduced into the polymers by post-reacting a polymer employing standard esterification or transesterification techniques.

Suitable functional groups are any functional groups which will react with a cross linking agent. Typical functional groups include hydroxyl, carboxyl, amino, epoxy and isocyanate groups. More than one type of functional group can be present in the vinylic polymers. Based on the functional group or functional groups present on the vinylic polymer, a cross linking agent is employed which will react with the functional groups to form a cross linked adhesive.

The functional vinylic polymers employed in the present invention must have a polydispersity of less than about 3 and a number average molecular weight (Mn) of from about 1,000 to about 6,000. Preferably, the number average molecular weight is from about 2,500 to about 4,500.  These functional vinylic polymers are known compounds and are disclosed in United States Patent 4,414,370; United States Patent 4,529,787; and United States Patent 4,546, 160.

Preferred functionally reactive polymers include those polymers comprising a soft monomer and a hydroxyl functional monomer.  Suitable soft monomers include butyl acrylate and 2-ethylhexyl acrylate.  Suitable hydroxyl functional monomers include 2-hydroxyethyl acrylate, 3-chloro-2-hydroxypropyl acrylate, 2-hydroxybutyl acrylate, 6-hydroxyhexyl acrylate, 2-hydroxymethyl methacrylate, 2-hydroxypropyl methacrylate, 6-hydroxyhexyl methacrylate, and 5,6-dihydroxyhexyl methacrylate.

The cross linking agents employed in the practice of the present invention are also well known compounds and include cross linking monomers and cross linking polymers.  The particular cross linking agent used in a particular application will depend upon the thermosetting polymer, the functional groups associated with such polymer and the end use application of the adhesive composition.  Suitable cross linking agents include polyepoxides, polyisocyanates, urea-aldehyde condensation products, benzoguanamine-aldehyde condensation products and melamine-formaldehyde condensation products.  Preferred cross linking agents include diisocyanates and polyisocyanates.  Suitable crosslinking agents include the glycol/diisocyanate prepolymers disclosed in U.S. Patent 4,145,514 which is incorporated herein by reference.

In the preparation of the high solids content cross linking adhesive compositions of the present invention, a reactive vinylic polymer is admixed with an amount of cross linking agent effective to form an adhesive composition. The optimum amount of cross linking agent to be admixed with the functional reactive vinylic polymer will depend on a variety of factors such as, for example, the specific polymer employed, the specific functional groups present on the polymer, the particular cross linking agent, the particular solvent, if employed, the particular catalyst, if employed, and the particular end use at hand. One skilled in the art can readily determine the optimum ratio of polymer and cross linking agent by employing routine formualting experiments. These formulation experiments would not require undue experimentation by one skilled in the art.

In general, the ratio of functionally reactive groups to cross linking agent ranges from about 1:2 to about 2:1 equivalents respectively. For example, when hydroxyethyl acrylate or hydroxyethyl methacrylate are employed as the hydroxyl functional component of the functionally reactive vinylic polymer and when polyisocyanate polymers are employed as the cross linking agents, then the polymer and cross linking agent are admixed in amounts which provides about equal molar proportions OH groups and NCO groups. Usually, a slight excess of crosslinker is employed. The optimum amount of vinylic polymer and crosslinker is readily determinable by one skilled in the art based on a variety of factors such as the particular vinylic polymer, the particular crosslinking agent and the curing conditions in the environment of use.

The reactive polymer and the cross linking agent are admixed employing standard admixing techniques. Neither the rate of addition nor the order of addition of the adhesive components is critical to the practice of the present invention.

A typical admixing step generally requires from about 5 minutes to about 60 minutes to form a substantially uniform mixture of the adhesive components. Once the adhesive formulation is prepared, it will cure or set in from about 1/4 hour up to more than about 48 hours. The exact cure time depends on a variety of factors, such as, for example, the specific monomers present in the functionally reactive vinylic polymer, the specific functional groups present on the polymer, the particular cross linking agent employed, the presence or absence of a solvent, the specific ratio of monomers present in the functionally reactive vinylic polymer, the temperature of the adhesive formulation, and the ratio of functionally reactive vinylic polymer to cross linking agent. The cure rate can be accelerated, i.e., the setting time shortened, by adding a catalyst to the adhesive formulation. Catalysts employed for this purpose are well known to one skilled in the art and include tertiary amine catalysts and tin catalysts such as dibutyl tin dilaurate. By employing a catalyst the cure rate can be accelerated to meet the needs of the adhesive application at hand.

Other standard adhesive formulation additives can be added to the present adhesive compositions. Such additives include solvents, pigments, dyes, rosin esters, antioxidants, preservatives, free radical scavengers, phenolics and hydrocarbon resins. The solvents are optionally employed to decrease the cost of the adhesive formulation or to decrease the viscosity of the formulation. Suitable solvents include methyl ethyl ketone, toluene, ethyl acetate, 1,1,1-trichloroethane or mixtures thereof. A preferred solvent is ethyl acetate. Additionally, the adhesive formulations of the present invention can be blended with conventional adhesives to raise the solids levels.

In a preferred embodiment of the present invention a hydroxyl functional acrylic polymer having a hydroxyl number of from about 25 to about 200 and preferably from about 30 to about 100, is admixed with a isocyanate monomer or isocyanate polymer to produce an acrylic-urethane adhesive composition. Such acrylic-urethane adhesives are particularly useful for flexible packaging applications. The acrylic-urethane adhesives for this particular application should preferably contain 100% non-volatile components and have a polymer component with a hydroxyl number of from about 30 to about 100, an initial peel strength of cured adhesive of about 400g per lineal inch, a final peel strength equal to destruct bond after 24 hours, and a glass transition temperature of about $-50^{\circ}$C (these properties are determined in accordance with the tests described in Example 1 below).

In one embodiment of a 100% solids acrylic-urethane adhesive, a hydroxyl functional acrylic polymer comprising of a soft monomer and a hydroxyl functional monomer are admixed with a suitable amount of an isocyanate cross linking agent. The hydroxyl functional polymer should have a number average molecular weight of from about 1,000 to about 6,000 a polydispersity of less than about 3 and a hydroxyl functionality of at least 1.5. Suitable as soft monomers are butyl acrylate and 2-ethylhexyl acrylate. Suitable as the hydroxyl functional monomers include hydroxyethyl acrylate and hydroxyethyl methacrylate. Preferred hydroxyl functional acrylic polymers include the terpolymer butyl acrylate/styrene/hydroxyethyl methacrylate (BA/ST/HEMA) and the terpolymer 2-ethylhexyl acrylate/butyl acrylate/hydroxyethyl methacrylate (2-EHA/BA-HEMA). The monomers in the BA/ST/HEMA terpolymer are preferably employed in amounts by weight as follows:

| MONOMER | PARTS BY WEIGHT |
|---------|-----------------|
| BA | 48-84 |
| ST | 10-20 |
| HEMA | 6-32 |

The monomers in the 2 EHA/BA/HEMA terpolymer are preferably employed in amounts by weight:

| MONOMER | PARTS BY WEIGHT |
|---------|-----------------|
| 2 EHA | 45-77 |
| BA | 20-30 |
| HEMA | 3-25 |

An especially preferred hydroxyl functional acrylic polymer is the terpolymer comprising 22 parts by weight butyl acrylate, 66 parts by weight 2-ethylhexyl acrylate and 12 parts by weight hydroxyethyl methacrylate. This preferred terpolymer is admixed with equimolar (+ or - 10%) amounts of a diisocyanate monomer, a polyisocyanate polymer or a glycol/diisocyanate prepolymer to form a 100% solids acrylic-urethane adhesive composition. This 100% solids adhesive has a workable viscosity at room temperature and can optionally contain a catalyst such as dibutyl tin dilaurate (0.001-0.1%) to accelerate the cure rate of the adhesive. These 100% solids acrylic-urethane adhesive compositions are employed in standard adhesive operations such as laminating films and multi-walled bags. They can also be used in pressure sensitive applications and as engineering adhesives.

The following examples illustrate the practice of the present invention but should not be construed as limiting its scope.

## EXAMPLE 1

The following hydroxyl functional polymers were prepared employing the procedures of U. S. Patent 4,529,787. Ditertiary butyl peroxide was employed as the initiator and propylene glycol monomethyl ether acetate (PM-ACETATE) was employed as the reaction solvent. After the polymer was prepared the solvent was stripped.

| BATCH | POLYMER COMPOSITION (PARTS BY WEIGHT) | | | HYDROXYL NUMBER | Tg $^\circ$C | Mn |
|---|---|---|---|---|---|---|
| | EHA | ST | HEMA | | | |
| 1 | 73 | 15 | 12 | 46 | -41 | 1640 |
| 2 | 73 | 15 | 12 | 61 | -35 | 2200 |
| 3 | 73 | 15 | 12 | 59 | -36 | 2730 |
| 4 | 67 | 15 | 18 | 83 | -40 | 1510 |
| 5 | 67 | 15 | 18 | 87 | -32 | 2190 |
| 6 | 67 | 15 | 18 | 86 | -30 | 2770 |
| 7 | 61 | 15 | 24 | 90 | -37 | 1810 |
| 8 | 61 | 15 | 24 | 104 | -28 | 2660 |
| 9 | 61 | 15 | 24 | 106 | -21 | 3460 |

The above polymer batches were admixed with a solvent to provide a solution containing 70, 75, or 85% solids. The solvents employed were ethyl acetate (ETAC) or methylethyl ketone (MEK). The viscosity of each polymer solution was measured with a Brookfield RVT Viscometer using an appropriate spindle and spindle speeds. The results are listed below.

0247426

| POLYMER SOLUTION | POLYMER BATCH | %SOLIDS | VISCOSITY (CENTIPOISE) | |
|---|---|---|---|---|
| | | | ETAC | MEK |
| 1a | 1 | 70 | 154 | 89 |
| 1b | 1 | 75 | 340 | 204.5 |
| 1c | 1 | 85 | 1680 | 1360 |
| 2a | 2 | 70 | 77.5· | 50 |
| 2b | 2 | 75 | 160 | 104 |
| 2c | 2 | 85 | 700 | 610 |
| 3a | 3 | 70 | 242 | 123 |
| 3b | 3 | 75 | 450 | 290.5 |
| 3c | 3 | 85 | 2520 | 1890 |
| 4a | 4 | 70 | 76 | 50 |
| 4b | 4 | 75 | 170 | 105.1 |
| 4c | 4 | 85 | 700 | 1280 |
| 5a | 5 | 70 | 170 | 98 |
| 5b | 5 | 75 | 330 | 212 |
| 5c | 5 | 85 | 1900 | 1360 |
| 6a | 6 | 70 | 361.5 | 165 |
| 6b | 6 | 75 | 710 | 442.5 |
| 6c | 6 | 85 | 3500 | 3180 |
| 7a | 7 | 70 | 105.5 | 63 |
| 7b | 7 | 75 | 220 | 143.5 |
| 7c | 7 | 85 | 1430 | 990 |
| 8a | 8 | 70 | 255.5 | 131 |
| 8b | 8 | 75 | 620 | 336 |
| 8c | 8 | 85 | 4660 | 3430 |
| 9a | 9 | 70 | 501 | 310 |
| 9b | 9 | 75 | 930 | 885 |
| 9c | 9 | 85 | 12550 | 6290 |

- 13 -

Various adhesive compositions were prepared by mixing the hydroxyl functional acrylic polymer ETAC solutions la-9c with a molar equivalent of DESMODUR CB-75 toluene diisocyanate based adduct. The ingredients were mixed for five minutes. The solids content was adjusted by adding an appropriate amount of ethyl acetate to the mixtures so that a coating weight of 1-4 pounds per ream could be achieved using a Number O Meyer rod for laydown. The peel strength of these adhesive compositions was tested by laminating a 3 mils Melinex 516 polyethylene terephthalate film employing the above-identified adhesives. The laminates were prepared and allowed to cure for 24 hours. One inch wide strips were cut from the laminates and t-peels were done on an Instron tensile tester at a separation rate of 12 inches/min. The peak peel and average peel values in grams(g) per lineal inch were determined. The results are listed below:

| ADHESIVE COMPOSITION | | PEEL STRENGTH (g/lineal inch) | |
| POLYMER BATCH | RUN | PEAK PEEL | AVG. PEEL |
| --- | --- | --- | --- |
| 1 | 1 | 20.0 | 12.5 |
| 1 | 2 | 31.5 | 16.0 |
| 1 | 3 | 50.0 | 20.0 |
| 2 | 1 | 29.0 | 17.5 |
| 2 | 2 | 30.0 | 25.0 |
| 2 | 3 | 30.0 | 20.0 |
| 3 | 1 | 127.5 | 95.0 |
| 3 | 2 | 122.0 | 90.0 |
| 3 | 3 | 122.5 | 75.0 |
| 4 | 1 | 135.0 | 102.5 |

- 14 -

| | | | |
|---|---|---|---|
| 4 | 2 | 125.0 | 102.5 |
| 4 | 3 | 131.0 | 120.0 |
| 5 | 1 | 133.5 | 115.0 |
| 5 | 2 | 110.0 | 97.5 |
| 5 | 3 | 132.5 | 107.5 |
| 6 | 1 | 170.0 | 145.0 |
| 6 | 2 | 124.0 | 92.5 |
| 6 | 3 | 130.0 | 105.0 |
| 7 | 1 | 115.5 | 100.0 |
| 7 | 2 | 109.0 | 89.0 |
| 7 | 3 | 100.5 | 80.0 |
| 8 | 1 | 343.3 | 298.3 |
| 8 | 2 | 466.0* | --- |
| 8 | 3 | 669.3* | --- |
| 9 | 1 | 399.0 | 300.0 |
| 9 | 2 | 384.0 | 276.7 |
| 9 | 3 | 424.3* | --- |

* substrate failure (no. avg. peel value given)

The various adhesive compositions described above exhibited pot lives exceeding 24 hours. The addition of a tin catalyst (dibutyl tin dilaurate) reduced the pot life and accelerated the curing rate of the adhesive composition. The tin catalyst was added at concentrations from 0.001-0.01% by weight of the adhesive composition

EXAMPLE 2

Employing the procedures disclosed in U.S. Patent 4,529,787 an hydroxyl functional acrylic resin was prepared which had the following monomer content:

- 15 -

| MONOMER | PARTS BY WEIGHT |
|---------|-----------------|
| 2-EHA | 66 |
| BA | 22 |
| HEMA | 6 |

By varying the reaction conditions the above polymer was prepared having various average number molecular weights ranging from about 1,000 to about 6,000. These various hydroxyl functional acrylic polymers were stripped of solvent and admixed with about equimolar amounts of an aromatic type polyisocyanate prepolymer (Mondur XP-743) or a toluene diisocyanate based adduct (Mondur CB-75) to form a 100% solids adhesive composition of the present invention. These adhesive compositions can optionally contain a catalyst and/or tackifiers.

## EXAMPLE 3

Employing the procedures disclosed in U.S. Patent 4,546,160, the following hydroxyl functional acrylic polymers were prepared. The monomer content of these polymers is listed below:

| MONOMER | PARTS BY WEIGHT |
|---------|-----------------|
| BA | 22 |
| 2-EHA | 66 |
| HEMA | 12 |

| MONOMER | % BY WEIGHT |
|---------|-------------|
| BA | 24 |
| 2-EHA | 76 |
| HEMA | 6 |

By modifying the reaction conditions during the preparation of the above hydroxyl functional acrylate polymers, the number average molecular weight of the polymers can range from about 1,000 to about 6,000. The above polymers having a number average molecular weight of from about 2,700-4,500 have viscosities (cone and plate viscometer) at room temperature of less than 1,000 poise. These polymers were admixed with equimolar (OH to NCO) amounts of MONDUR XP-743 aromatic type polyisocyanate prepolymer resulting in a 100% solids thermosetting adhesive composition exhibiting a workable viscosity. These adhesives are useful for laminating applications and as pressure sensitive adhesive applications.

In other representative operations, the various vinylic polymers having (a) an average functionality of at least about 1.5, (b) a polydispersity of less than about 3 and (c) a number average molecular (Mn) of from about 1,000 to about 6,000 are admixed with an effective cross linking agent to produce a 100% solids thermosetting adhesive compositions having a workable viscosity.

-17-
## CLAIMS

1. A method of preparing a 100% solids thermosetting adhesive composition having a suitable working viscosity which is characterized by admixing:

    (a)  a vinylic polymer having:

        (i)  a number average functionality of at least about 1.5;

        (ii)  a polydispersity of less than about 3; and

        (iii)  a number average molecular weight (Mn) of from about 1,000 to about 6,000; and

    (b)  an effective adhesive-forming amount of a cross linking agent to form an adhesive polymer

2. The method of Claim 1, characterized in that the vinylic polymer is a hydroxyl functional acrylic polymer

3. The method of Claim 2 characterized in that the hydroxyl functional acrylic polymer has a hydroxyl number of from about 25 to about 200.

4. The method of Claim 2, characterized in that the hydroxyl functional acrylic polymer comprises a soft monomer and a hydroxyl functional monomer and optionally a hard monomer.

5. The method of Claim 4, characterized in that the soft monomer is n-butyl acrylate, 2-ethylhexyl acrylate, or mixtures thereof and the hydroxyl functional monomer is 2-hydroxyethyl acrylate, 3-chloro-2-hydroxypropyl acrylate, 2-hydroxybutyl acrylate, 6-hydroxyhexyl acrylate, 2-hydroxymethyl methacrylate, 2-hydroxypropyl methacrylate, 6-hydroxyhexyl methacrylate, 5,6-dihydroxyhexyl methacrylate or mixtures thereof.

6.    The method of Claim 5, characterized
in that the monomer content of the hydroxyl functional
acrylic polymer is as follows in parts by weight:

| MONOMER: | PARTS BY WEIGHT: |
|---|---|
| butylacrylate | 48-84 |
| styrene | 10-20 |
| hydroxyethyl methacrylate | 6-32 |

7.    The method of any of claims 2 to 6,
characterized in that the cross linking agent is a
diisocyanate or a polyisocyanate.

8.    A 100% solids thermosetting adhesive
composition having a workable viscosity which is characterized by:

(a)    a vinylic polymer having:

(i)    a number average functionality
of at least about 1.5;

(ii)    a polydispersity of less than
about 3; and

(iii)    a number average molecular weight
(Mn) of from about 1,000 to about
6,000; and

(b)    an effective adhesive-forming amount
of a cross linking agent.

9.    The composition of Claim 8, characterized in that the vinylic polymer is a hydroxyl functional acrylic polymer

10.    The composition of Claim 9, characterized in that the hydroxyl functional acrylic polymer
has a hydroxyl number of from about 25 to 200.

11.    The composition of Claim 9, characterized in that the hydroxyl functional acrylic
polymer comprises a soft monomer, a hydroxyl functional
monomer and optionally a hard monomer.

0247426

12. The composition of Claim 11, characterized in that the soft monomer is butyl acrylate, 2-ethylhexyl acrylate, or mixtures thereof and the hydroxyl functional monomer is 2-hydroxyethyl acrylate, 3-chloro-2-hydroxypropyl acrylate, 2-hydroxybutyl acrylate, 6-hydroxyhexyl acrylate, 2-hydroxymethyl methacrylate, 2-hydroxypropyl methacrylate, 6-hydroxyhexyl methacrylate, 5,6-dihydroxyhexyl methacrylate or mixtures thereof.

13. The composition of Claim 12, characterized in that the monomer content of the hydroxyl functional acrylic polymer is as follows in parts by weight:

| MONOMER: | PARTS BY WEIGHT: |
|---|---|
| butylacrylate | 48-84 |
| styrene | 10-20 |
| hydroxyethyl methacrylate | 6-32 |

14. The composition of any of Claims 8 to 13, characterized in that the cross linking agent is a diisocyanate or a polyisocyanate.

15. The composition of any of Claims 8 to 13, characterized by a volatile organic solvent level of less than about 2.8 pounds per gallon.

16. The composition of Claim 14, characterized in that the volatile organic solvent is methyl ethyl ketone, toluene, ethyl acetate, 1,1,1-trichloroethane or mixtures thereof.

17. The composition of Claim 14. characterized in that the solvent is ethyl acetate.